**Europäisches Patentamt**

**European Patent Office**

**Office européen des brevets**

(11) Veröffentlichungsnummer: **0 012 903**
**B1**

(12) **EUROPÄISCHE PATENTSCHRIFT**

(45) Veröffentlichungstag der Patentschrift:
**18.11.81**

(21) Anmeldenummer: **79105032.1**

(22) Anmeldetag: **10.12.79**

(51) Int. Cl.³: **B 01 D 59/22**

(54) Verfahren zur Trennung von Isotopen.

(30) Priorität: **21.12.78 DE 2855191**

(43) Veröffentlichungstag der Anmeldung:
**09.07.80 Patentblatt 80/14**

(45) Bekanntmachung des Hinweises auf die Patenterteilung:
**18.11.81 Patentblatt 81/46**

(84) Benannte Vertragsstaaten:
**AT BE CH FR GB IT LU NL SE**

(56) Entgegenhaltungen:
**DE-A-1 673 089**
**FR-A-1 490 724**
**US-A-3 969 196**

(73) Patentinhaber: **Fried. Krupp Gesellschaft mit
beschränkter Haftung, Altendorfer Strasse 103,
D-4300 Essen 1 (DE)**

(72) Erfinder: **Coenen, Hubert, Dr., Wortbergrode 13,
D-4300 Essen 1 (DE)**
Erfinder: **Neuschütz, Dieter, Dr., Neckarstrasse 49,
D-4300 Essen 18 (DE)**

ACTORUM AG.

# Verfahren zur Trennung von Isotopen

Die Anmeldung betrifft ein Verfahren zur Trennung von Isotopen. Isotope eines Elementes besitzen unterschiedliche physikalische Eigenschaften, die zum Nachweis und zur Trennung von Isotopen ausgenutzt werden können.

Die wirksamste Methode zur Isotopentrennung ist die massenspektrographische, die eine vollständige Trennung der Isotope in einer Stufe ermöglicht. Dabei wird die verschieden grosse elektrische und magnetische Ablenkbarkeit gleich geladener Ionen unterschiedlicher Masse ausgenutzt. Wegen des geringen Ionenstroms ist aber die Stoffmenge, die gesammelt werden kann, nur verschwindend klein. Die Massenspektrographen werden deshalb nur als Nachweisgeräte, nicht jedoch zur Isotopenanreicherung benutzt.

Eine Methode, mit der unter geeigneten Bedingungen ein nahezu ebenso grosser Trennfaktor erzielt werden kann, beruht darauf, dass mit monochromatischem Licht (Laser) eine Isotopensorte eines Gemisches gezielt angeregt und damit in einen reaktiven Zustand überführt werden kann, während die anderen Isotope im nichtreaktiven Grundzustand bleiben. Technisch ist dieses Verfahren jedoch nur bedingt verwertbar, da relativ teure, abstimmbare Laser hoher Intensität und hoher Monochromasie bereitgestellt werden müssen und die Ausbeute relativ gering ist.

Technisch angewendet werden zur Isotopenanreicherung die Trennmethoden mittels Trennwanddiffusion, Thermodiffusion und Druckdiffusion (Trenndüse). Da eine einzelne Trennstufe jedoch nur eine geringe Änderung der Zusammensetzung des Isotopengemisches erzielt, muss man, um die gewünschte Anreicherung zu erreichen, mehrere Stufen, sogenannte Kaskaden, hintereinander schalten.

Bekannt ist auch die Trennung von Isotopen durch Zentrifugieren. Gegebenenfalls kann dieses Verfahren auch mit dem Diffusionsverfahren kombiniert werden.

Technische Anwendung findet auch die Isotopentrennung durch fraktionierte Destillation und Austauschreaktionen. Das erstgenannte Verfahren beruht auf der Abhängigkeit des Dampfdruckes eines Stoffes von seiner Masse. Bei der Methode der Austauschreaktion zwischen zwei verschiedenen Verbindungen wird die Abhängigkeit der Gleichgewichtskonstanten von der Masse ausgenutzt. Anwendung findet dieses Verfahren vor allem bei der Gewinnung von schwerem Wasser.

In kleineren Mengen wird schweres Wasser auch bei der Wasserelektrolyse hergestellt, wo sich das Deuterium aufgrund kinetischer Effekte in der wässrigen Phase anreichert.

Auch Chromatographische Verfahren eignen sich zur Trennung von Isotopen, sind jedoch zur Anreicherung nicht wirtschaftlich.

Weiterhin sind Isotopieeffekte zwischen zwei flüssigen Phasen einer Substanz bekannt, welche die Grundlage für ein entsprechendes Anreicherungsverfahren darstellen. So ist beispielsweise die Lithium-Isotopen-Anreicherung durch Extraktion von Lithium-Ionen in Wasser oder organischen Lösungsmitteln und von metallischem Lithium in flüssigem Quecksilber (Amalgam) möglich.

Es ist Aufgabe der Erfindung, ein möglichst wirtschaftlich arbeitendes Verfahren zur Trennung von Isotopen anzugeben.

Überraschenderweise stellt die Lösung der Aufgabe das im Anspruch 1 beschriebene Verfahren dar.

Als überkritisches Gas kann $CO_2$, als Schleppmittel können Wasser und Benzol verwendet werden. Vorteilhafterweise wird die Extraktion bei Drücken, die bis zu 350 bar über dem kritischen Druck liegen und bei Temperaturen, die bis zu 100°C über der kritischen Temperatur liegen, durchgeführt.

Es ist u. a. aus der DE-AS 1 493 190 bekannt, zur Auftrennung von flüssigen und/oder festen Stoffgemischen, die organische Verbindungen und/oder organische Gruppen aufweisende Verbindungen enthalten, die Stoffgemische mit überkritischen Gasen zu behandeln und nach Abtrennung der beladenen überkritischen Gasphase die in ihr enthaltenen Verbindungen durch Entspannung und/oder Temperaturänderung zurückzugewinnen. Dieses Verfahren wird bei schwerflüchtigen und temperaturempfindlichen Stoffgemischen angewandt. Auch die Trennung von Stoffgemischen mit nahezu beieinanderliegenden Siedepunkten ist möglich.

Überraschenderweise lassen sich jedoch nach dem in Anspruch 1 beschriebenen Verfahren nicht nur chemisch unterschiedliche Stoffe, sondern auch Isotope eines Elementes voneinander trennen.

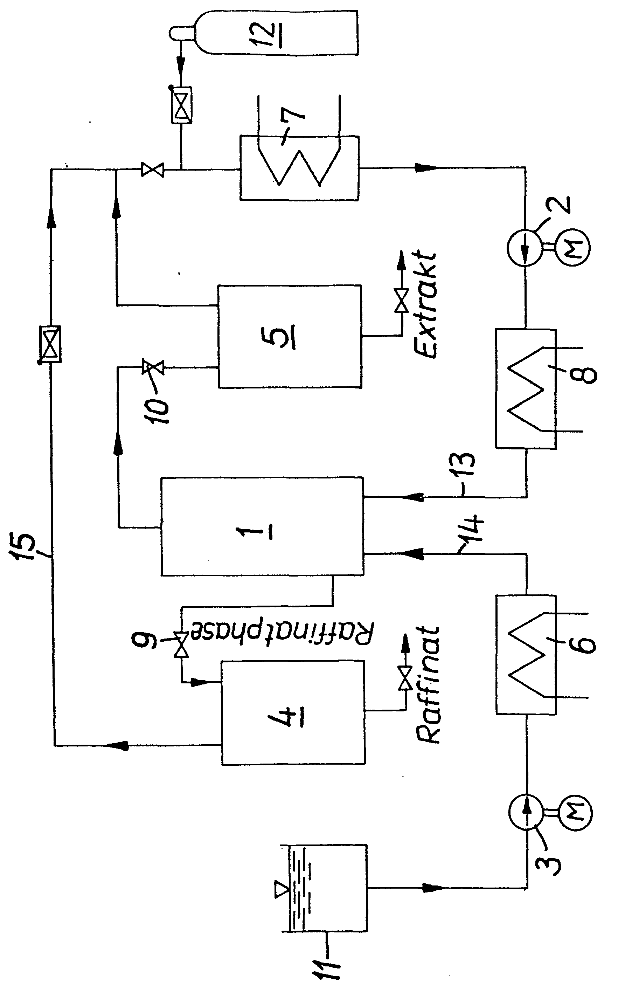

Die zur Durchführung des erfindungsgemässen Verfahrens verwendbare Anlage ist in der Zeichnung schematisch dargestellt.

Sie besteht im wesentlichen aus einem Autoklav 1, einer Flüssigkeitspumpe 2, zur Umwälzung und Druckerhöhung des Gases, einer Fördervorrichtung (z. B. Pumpe) 3 zur kontinuierlichen Zuführung des Isotopengemisches, einem Abscheider 4 für das Raffinat, einem Abscheider 5 zur Extrakt-Abscheidung, einem Wärmetauscher 6 zur Erwärmung des Einsatzgemisches, einem Kondensator 7 zur Verflüssigung des Extraktionsgases, einem Wärmeaustauscher 8 zur Aufheizung in den überkritischen Zustand, einem Drosselventil 9 zur Entspannung der Raffinatphase, einem dem Abscheider 5 zugeordneten Drosselventil 10 zur Entspannung der Extraktphase, einem Vorratsbehälter 11 für das Isotopengemisch und einem Vorratsbehälter 12 für das Gas.

Bei kontinuierlicher Betriebsweise tritt ein unter überkritischen Bedingungen von Druck und Temperatur stehendes Gas am Boden des Autoklaven 1 durch eine Leitung 13 in das zu trennende Isotopengemisch ein, das durch eine Leitung 14 dem Autoklaven zugeführt wird. Das Gas durchströmt aufgrund seiner geringeren Dichte das Isotopengemisch und belädt sich dabei mit einer oder mehreren Komponenten des Gemisches. Die beladene überkritische Gasphase (Extraktphase) wird aus dem oberen Bereich des Autoklaven 1 abgezogen und anschliessend durch das Drosselventil 10 entspannt. Infolge der Druckerniedrigung und Abkühlung verliert das Gas, entsprechend dem neuen thermodynamischen Zustand, seine Aufnahmefähigkeit für die extrahierten Komponenten teilweise oder ganz, wodurch die im Autoklaven aufgenommenen Komponenten teilweise oder vollständig abgeschieden und am Boden des Abscheiders in flüssiger oder fester Form (Extrakt) abgezogen werden. Das entspannte und regenerierte, gasförmige Extraktionsmittel verlässt den Abscheider und wird nach erfolgter Kondensation wieder der Flüssigkeitspumpe 2 mit nachgeschaltetem Wärmetauscher zur erneuten Erzeugung eines überkritischen Gases zugeführt. Es ist jedoch ebenfalls möglich, anstelle der Druckerhöhung des Gases im flüssigen Zustand, wie sie in der vorliegenden Versuchsanlage realisiert wird, eine Druckerhöhung im gasförmigen Zustand durchzuführen.

Im Bereich des Bodens des Autoklaven 1 wird das an den Extraktionsstoffen verarmte Gemisch mit dem darin gelösten Extraktionsmittel als Raffinatphase abgezogen und zur Rückgewinnung des Gases (Extraktionsmittels) in dem Abscheider 4 entspannt. Das Raffinat wird am Boden des Abscheiders 4 entnommen und das Gas zur weiteren Durchführung der Trennung in den Kreislauf über die Leitung 15 zurückgeführt. Die kontinuierliche Arbeitsweise wird durch Flüssigkeitspumpe 2 und Wärmetauscher 8 ermöglicht. Eine Zugabe von Gas aus einem Vorratsbehälter 12 ist zur Inbetriebnahme der Anlage und zur Deckung von Gasverlusten während des Betriebes erforderlich.

Der Autoklav kann auch chargenweise mit einer Probe des zu trennenden Isotopengemisches gefüllt werden. Der Gaskreislauf bewirkt wieder eine Verarmung des Isotopengemisches im Autoklav 1 an einer bevorzugten Komponente, die sich durch Entspannen der Extraktphase in dem Abscheider 5 ansammelt. Das Raffinat wird nach einer bestimmten Umwälzzeit des Extraktionsmittels (Extraktionszeit) aus dem Autoklav 1 entnommen. Der Chargenbetrieb ist deshalb besonders geeignet zur Bestimmung des zeitlichen Verlaufs der extrahierten Stoffmenge sowie der zeitlichen Änderung der Extrakt- bzw. Raffinatszusammensetzung. Er ist ebenfalls für den Einsatz von Feststoffen geeignet.

In der soeben beschriebenen Anlage ist mit dem erfindungsgemässen Verfahren folgender Versuch durchgeführt worden. Eine Menge von 1000 g einer reinen, wässrigen 25prozentigen NaCl-Lösung mit natürlichem Isotopenverhältnis von $Cl^{35} : Cl^{37} =$ 3,124 ist mit einem Massenstrom von 9,53 kg/h $CO_2$ bei 280 bar und 60 °C begast worden. Das beladene Gas ist in dem nachgeschalteten Abscheider 5 bei 56 bar und 29 °C von den extrahierten Stoffen befreit und in den Gaskreislauf zurückgeführt worden. Während des Versuches sind am Autoklaven alle zwei Stunden Proben der Kochsalzlösung entnommen und im Massenspektrometer auf das Verhältnis von $NaCl^{35}/NaCl^{37}$ (Masse 58/Masse 60) untersucht worden. Die massenspektrometrische Analyse ergab die in der folgenden Tabelle aufgeführten Isotopenverhältnisse:

| Proben-Nr. | Extraktionszeit h | Isotopenverhältnis $Cl^{35}/Cl^{37}$ | Trennfaktor $\alpha$ |
|---|---|---|---|
| 1 | 0 | 3,12 | 1 |
| 2 | 2 | 3,32 | 1,06 |
| 3 | 4 | 3,38 | 1,08 |

In dem obenbeschriebenen Versuch konnte schon nach zweistündiger Extraktionszeit eine deutliche Verschiebung des Isotopenverhältnisses festgestellt werden.

Bei diesem diskontinuierlichen Betrieb der Anlage wurden Trennfaktoren von $\alpha = 1,06$ bzw. 1,08 nach zwei bzw. vier Stunden erreicht. Nach mehr als vierstündiger Extraktionszeit, beispielsweise nach sechs Stunden, wird, im Gegensatz zu den Proben 1 bis 3 in der obigen Tabelle, vorzugsweise das leichtere Chlor-Isotop extrahiert, worauf bei der Isotopenentnahme geachtet werden muss.

Die Extraktion mit überkritischen Gasen kann als ein geeignetes Verfahren zur Auftrennung von Isotopengemischen von entweder in fester, feinzerkleinerter Form, in wässriger Lösung als Schmelze oder gelöst in organischen Lösungsmitteln vorliegenden Stoffen angesehen werden.

Obwohl im o.a. Beispiel als Extraktionsmittel überkritisches $CO_2$ gewählt wurde, eignen sich auch andere überkritische Gase sowie Gemische aus überkritischen Gasen bei beliebigen Mischungsverhältnissen mit und ohne Zugabe eines Schleppmittels, welches unterkritisch ist, als Extraktionsmittel.

Zur Erreichung einer gewünschten Anreicherung von einer Komponente im Raffinat oder Extrakt werden gegebenenfalls mehrere Anlagestufen hintereinandergeschaltet.

Das Verfahren der Extraktion mit überkritischen Gasen eignet sich grundsätzlich zur Trennung beliebiger Isotopenmischungen, wobei es jedoch vorteilhafterweise zur Trennung der technisch wichtigen Isotopengemische wie Wasserstoff-Deuterium, Lithium[6]-Lithium[7] und Uran[235]–Uran[238] angewendet wird.

## Patentansprüche

1. Verfahren zur Trennung von Isotopen eines Elementes, insbesondere zur Trennung der Isotope Wasserstoff-Deuterium, Lithium$^6$/Lithium$^7$ und Uran$^{235}$/Uran$^{238}$, dadurch gekennzeichnet, dass die Isotope durch Extraktion mit überkritischen reinen Gasen oder mit überkritischen Gasgemischen getrennt werden.

2. Verfahren nach Anspruch 1, dadurch gekennzeichnet, dass als überkritisches Gas $CO_2$ verwendet wird.

3. Verfahren nach Anspruch 1, dadurch gekennzeichnet, dass Isotope durch Extraktion mit überkritischen Gasen mit Schleppmittel getrennt werden.

4. Verfahren nach Anspruch 1, dadurch gekennzeichnet, dass als Schleppmittel Wasser oder Benzol dienen.

5. Verfahren nach Anspruch 1, dadurch gekennzeichnet, dass die Extraktion bei Drücken, die bis zu 350 bar über dem kritischen Druck liegen und bei Temperaturen, die bis zu 100 °C über der kritischen Temperatur liegen, erfolgt.

## Claims

1. Method for the separation of isotopes of an element, especially for the separation of the isotopes hydrogen/deuterium, lithium$^6$/lithium$^7$ and uranium$^{235}$/uranium$^{238}$, characterized in that the isotopes are separated by extraction with super-critical pure gases or with super-critical gas mixtures.

2. Method according to claim 1, characterized in that $CO_2$ is used as super-critical gas.

3. Method according to claim 1, characterized in that isotopes are separated by extraction with super-critical gases with an entrainer.

4. Method according to claim 1, characterized in that water or benzene serve as entrainer.

5. Method according to claim 1, characterized in that the extraction takes place at temperatures lying up tu 350 bars above the critical pressure and at temperatures lying up to 100 °C above the critical temperature.

## Revendications

1. Procédé pour la séparation des isotopes d'un élément notamment pour la séparation des isotopes d'hydrogène, de dentérium, de lithium$^6$/lithium$^7$ et d'uranium$^{235}$/uranium$^{238}$, caractérisé en ce que les isotopes sont séparés par extraction à l'aide de gaz puis à l'état hypercritique ou de mélanges gazeux à l'état hypercritique.

2. Procédé suivant la revendication 1, caractérisé en ce qu'on utilise du $CO_2$ en tant que gaz à état hypercritique.

3. Procédé suivant la revendication 1, caractérisé en ce que les isotopes sont séparés par extraction à l'aide de gaz à l'état hypercritique et d'un agent d'entraînement.

4. Procédé suivant la revendication 1, caractérisé en ce qu'on utilise en tant qu'agent d'entraînement de l'eau ou du benzène.

5. Procédé suivant la revendication 1, caractérisé en ce que l'extraction s'effectue à des pressions qui sont au maximum de 350 bars supérieures à la pression critique et à des températures qui sont au maximum de 100 °C supérieures à la température critique.

0 012 903